# EUROPEAN PATENT APPLICATION

(11) **EP 4 668 200 A1**
(43) Date of publication of application: **24.12.2025**
(21) Application number: 23925366.9
(22) Date of filing: 23.10.2023
(51) Int. Cl.: G06Q 50/10

(54) **METHOD FOR PROVIDING FOOD**

(30) Priority: 28.02.2023 JP 2023029671
(71) Applicant: Suntory Holdings Limited, Osaka 530-8203 (JP)
(72) Inventor: TAKAHASHI, Daiki, Tokyo 108-8503 (JP); MURAI, Moto, Tokyo 108-8503 (JP); KANO, Yuho, Tokyo 108-8503 (JP); YAMAGUCHI, Ryoo, Tokyo 108-8503 (JP)
(74) Representative: Vossius & Partner Patentanwälte Rechtsanwälte mbB
(86) International application number: PCT/JP2023/038140
(87) International publication number: WO 2024/180812

(57) **Abstract**

Conventionally, it is not possible to provide, at a leisure venue, a food product that can serve as a special memory, to a consumer who participated in leisure activities at the leisure venue. It is possible to provide a food product, in which content generated at a leisure venue is presented on the container of the food product, to a consumer at the leisure venue, by using a method for providing a food product at a leisure venue, including: a content acquisition step of acquiring content generated at the leisure venue; a printing step of printing the content onto a print medium to acquire a content presentation medium; and an attachment step of attaching the content presentation medium to a container of the food product, wherein the food product is provided to a consumer at the leisure venue.

## Description

### Technical field

The present invention relates to, for example, a method for providing a food product at a leisure venue.

### Background Art

Conventionally, concession stands have been provided at leisure venues such as baseball stadiums, where participants in leisure activities, such as spectators of baseball games, can purchase food products (see Non-Patent Document 1).

In addition, there has been a conventional technique for selling expired food products, aiming to reduce food waste (see Patent Document 1).

### Citation List

### Patent Document

Patent Document 1: JP 7162389B

### Non-Patent Document

Non-Patent Document 1: "Tokyo Dome Gourmet Food", [online], TOKYO DOME, [searched on January 17, 2023], Internet [URL: https://www.tokyo-dome.co.jp/dome/baseball/gourmet/]

### Summary of Invention

### Technical Problem

However, in the conventional technology, it is not possible to provide a food product packaged in a container on which content generated at a leisure venue is presented, to a consumer, at the leisure venue. As a result, the consumer has not been able to acquire a food product that leaves a memorable impression of the leisure experience.

### Solution to Problem

A method according to a first aspect of the present invention is a method for providing a food product at a leisure venue, including: a content acquisition step of acquiring content generated at the leisure venue; a printing step of printing the content onto a print medium to acquire a content presentation medium; and an attachment step of attaching the content presentation medium to a container of the food product, wherein the food product is provided to a consumer at the leisure venue.

With this configuration, it is possible to provide a food product packaged in a container on which content generated at a leisure venue is presented, to a consumer, at the leisure venue. As a result, the consumer is able to acquire a food product that leaves memorable impression of the leisure experience.

A method according to a second aspect of the present invention is the method according to the first aspect of the invention, further including: an environment acquisition step of acquiring one or more pieces of environmental information regarding an environment in which the content is acquired, wherein, in the printing step, the content and the one or more pieces of environmental information are printed onto the print medium to acquire the content presentation medium.

With such a configuration, one or more pieces of environmental information are also printed onto the content presentation medium, and therefore the consumer can acquire a food product that is even more memorable.

A method according to a third aspect of the present invention is the method according to the second aspect of the invention, wherein the one or more pieces of environmental information include environment-specific information that is specific to the time when the content was acquired.

With this configuration, the environment-specific information is also printed onto the content presentation medium, and therefore the consumer can acquire a food product that is even more memorable.

A method according to a fourth aspect of the present invention is the method according to the second or third aspect of the invention, wherein the one or more pieces of environmental information include consumer-unique information that is unique to the consumer to which the food product packaged in the container is transferred.

With this configuration, the consumer-unique information is also printed onto the content presentation medium, and therefore the consumer can acquire a food product that is even more memorable.

A method according to a fifth aspect of the present invention is the method according to the fourth aspect of the invention, wherein, in the environment acquisition step, the consumer-unique information is automatically acquired.

With this configuration, it is possible to provide a food product packaged in a container on which content generated at a leisure venue is presented, to a consumer, at the leisure venue.

A method according to a sixth aspect of the present invention is the method according to any one of the second to fifth aspects of the invention, wherein the one or more pieces of environmental information contain a code that specifies the food product instead of the name of the food product.

With this configuration, it is possible to provide a food product with a more stylishly designed content presentation medium attached thereto.

A method according to a seventh aspect of the present invention is the method according to any one of the second to sixth aspects of the invention, wherein the one or more pieces of environmental information contain time information that specifies the time when the content was generated.

With this configuration, time information specifying the time when the content was generated is also printed onto the content presentation medium, and therefore the consumer can acquire a food product that is even more memorable.

A method according to an eighth aspect of the present invention is the method according to any one of the first to seventh aspects of the invention, further including: an additional information acquisition step of acquiring additional information regarding the content, wherein, in the printing step, the content and the additional information are printed onto the print medium to acquire the content presentation medium.

With this configuration, the content presentation medium can be easily attached to the food container.

A method according to a ninth aspect of the present invention is the method according to any one of the first to eighth aspects of the invention, wherein the container of the food product has a guide on a surface thereof, the guide specifying an area where the content presentation medium is to be attached.

With this configuration, the content presentation medium can be easily attached to the food container.

A method according to a tenth aspect of the present invention is the method according to any one of the first to ninth aspects of the invention, wherein the food product is a beverage, and the container of the food product is a beverage container.

With this configuration, a beverage in a beverage container on which content generated at a leisure venue is presented can be provided to a consumer at the leisure venue.

A method according to an eleventh aspect of the present invention is the method according to any one of the first to tenth aspects of the invention, wherein the content presentation medium is a two-layer sticker including an upper-layer sticker portion and a lower-layer sticker portion, and the content is printed onto the upper-layer sticker portion.

With this configuration, after the food has been consumed, the upper-layer sticker portion alone can be peeled off and attached to something else, and therefore memories can be preserved and the container can be recycled.

A method according to a twelfth aspect of the present invention is the method according to the eleventh aspect of the invention, wherein the two-layer sticker includes an indication that the upper-layer sticker portion is peelable.

With this configuration, it becomes possible to provide a consumer with an opportunity to preserve memories after consuming the food.

### Advantageous Effects of Invention

With the method for providing a food product according to the present invention, it is possible to provide a food product packaged in a container on which content generated at a leisure venue is presented, to a consumer, at the leisure venue.

### Brief Description of Drawings

FIG. 1 is a conceptual diagram of a production system A that supports the implementation of a method according to a first embodiment.
FIG. 2 is a block diagram of the production system A according to the same.
FIG. 3 is a flowchart illustrating a processing flow of a method for providing a food product according to the same.
FIG. 4 is a diagram showing an example of a content presentation medium according to the same.
FIG. 5 shows an image of a food container according to the same.
FIG. 6 is a diagram showing an image of a food container according to the same.
FIG. 7 is a diagram showing an image of a food container according to the same.

### Description of Embodiments

Hereinafter, an embodiment of a method for providing a food product will be described with reference to the drawings.

### First Embodiment

The present embodiment describes a method for providing a food product to a consumer at a leisure venue, the method including the steps of acquiring content generated at the leisure venue, printing the content on a print medium, and attaching the content presentation medium on which the content is printed, to a food container. It should be noted that the provision of a food product here may be either for a fee or free of charge. Although it is preferable that the food container to which the content presentation medium is attached be a container that contains food, the content presentation medium may be attached to a container that does not contain food, and thereafter food may be placed into the container.

A leisure venue is a venue where leisure activities take place. Examples of leisure venues include sports venues such as baseball stadiums, soccer stadiums, and golf courses, concert halls, theaters, theme parks, exposition sites, art museums, history museums, observation decks, parks, and tourist attractions. However, a leisure venue can be any place where leisure activities take place, and there is no limitation on the type thereof.

It should be noted that "leisure" refers to entertainment. The term "leisure" may be broadly interpreted to include, for example, tourism and recreational activities. Leisure may include, for example, attending sporting events, concerts, theatrical performances, or engaging in sports activities, but there is no limitation on the type thereof.

The consumer is the person receiving the food product at the leisure venue. The consumer is typically a person who has enjoyed leisure activities at the leisure venue. Receiving a food product at the leisure venue may also include receiving the food product in the vicinity of the leisure venue. The vicinity of the leisure venue may include, for example, an area just outside the exit of the leisure venue or the nearest train station to the leisure venue.

The present embodiment also describes a method for producing a container-packaged food product in which one or more pieces of environmental information, which will be described later, are printed onto a print medium, which will be described later.

The present embodiment also describes a method for producing a container-packaged food product will be described in which environment-specific information, which is specific to the time when the content was acquired, is printed onto a print medium.

The present embodiment also describes a method for producing a container-packaged food product in which consumer-unique information, which is information unique to the consumer to which the container-packaged food product is transferred, is printed onto a print medium.

Furthermore, the present embodiment describes a method for producing a container-packaged food product in which time information specifying the time when the content was generated is printed onto a print medium.

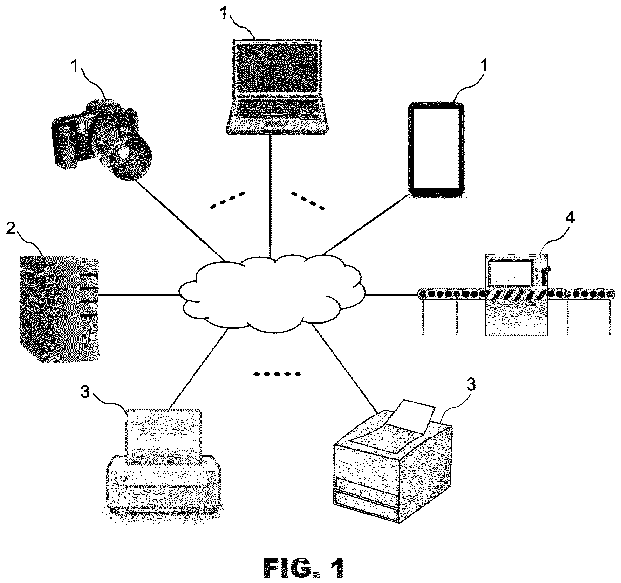

FIG. 1 is a conceptual diagram of a production system A that supports the implementation of a method according to the present embodiment. The method according to the present embodiment is a method for providing a food product to a consumer at a leisure venue.

The production system A includes one or more content generation devices 1, an information processing device 2, one or more printing devices 3, and one or more attachment devices 4.

Each content generation device 1 is a device that generates content. Each content generation device 1 is, for example, a camera that captures still images or moving images, or a device that draws illustrations. The device that draws illustrations is, for example, a so-called personal computer, a tablet, or a smartphone. To generate means to acquire, and includes, for example, capturing images and receiving input from a person. It is preferable that each content generation device 1 perform content generation during leisure activities at a leisure venue. The phrase "during leisure activities" refers to, for example, during a sports game, a concert, or an event. Each content generation device 1 may store a device identifier and transmit the generated content in pair with the device identifier.

The device identifier is information that identifies the content generation device 1. The device identifier is, for example, the ID of the content generation device 1 or the ID of the owner of the content generation device 1 (e.g., the person who captures images). A person who uses the content generation device 1 to acquire content (for example, by capturing images) is, for example, a producer. The producer is a person who contributes to the creation of the content. The producer is, for example, a person who provides a food product, or a person who provides content as a business, but may also include a consumer who receives the food product. That is to say, the consumer may create part or all of the content.

The content is information to be printed. The content is, for example, still images, moving images, or illustrations. It is preferable that the content be information that can only be acquired at the leisure venue. It is preferable that the content be information related to leisure. It should be noted that the printing is two-dimensional printing, but it may also be three-dimensional printing (3D printing).

The information processing device 2 is a device that receives the content generated by the content generation devices 1 and provide it to any of the printing devices 3 for printing. The information processing device 2 may also be a device that causes any attachment device 4 to perform attachment processing, which will be described later. The information processing device 2 may be a device that accepts login from a producer's terminal (not shown) and accepts an instruction to create content using the terminal. In such a case, the information processing device 2 performs, for example, authentication processing using a user identifier included in a login instruction from the terminal, and performs processing to log in from the terminal if authentication is permitted. The details of the information processing device 2 will be described later. It is preferable that the information processing device 2 perform the processing described below during leisure activities.

Each printing device 3 is a device that prints content onto a print medium. Each printing device 3 is typically a device that prints the content generated by any content generation device 1 onto a print medium. The result of printing the content onto a print medium is a content presentation medium. A content presentation medium is a medium on which content is presented. It is preferable that the printing devices 3 perform printing during leisure activities.

The printing devices 3 are typically printers. The printing devices 3 are usually color printers, but may also be monochrome printers. The printing devices 3 are typically two-dimensional printers, but may also be three-dimensional printers.

The print medium is the medium on which the content is to be printed. The print medium is typically paper, but may also be resin or the like, and there is no limitation on the material thereof. It is preferable that the print medium be a sticker. It is further preferable that the print medium be a two-layer sticker from which an upper-layer sticker portion thereof is peelable. It is preferable that the print medium be a blank medium, but it may also be a medium on which some printing has been performed.

Each attachment device 4 is a device that attaches the content presentation medium to a food container. The content presentation medium is a print medium on which content is printed. It should be noted that, if the task of attaching the content presentation medium to the food container is performed manually, the production system A does not require the attachment devices 4. It is preferable that the attachment processing, which is the processing of attaching the content presentation medium to a food container, be carried out during leisure activities. It should be noted that the attachment processing may be performed manually. It is further preferable that the content presentation medium be a sticker. It is further preferable that the content presentation medium be a two-layer sticker from which an upper-layer sticker portion thereof is peelable. It is also preferable that the two-layer sticker include an indication that the upper-layer sticker portion is peelable.

The food container is a container for food. The food container is typically a container in which food is placed. Examples of food containers include cans, bottles, plastic bottles, and plastic cups, but there is no limitation on the material or shape thereof. It is preferable that the food container have a guide on the surface thereof that specifies the area where the content presentation medium is to be attached. The guide is typically human recognizable. The guide is, for example, a line that specifies a part or all of the area where the content presentation medium is to be attached. The lines may be printed or may expressed by protrusions or recesses on the surface of the container.

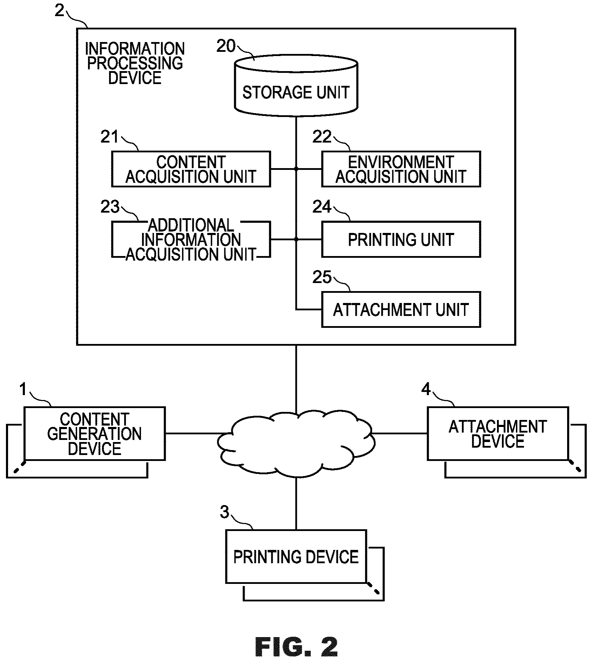

FIG. 2 is a block diagram of the production system A according to the present embodiment. The information processing device 2 included in the production system A includes a content acquisition unit 21, an environment acquisition unit 22, an additional information acquisition unit 23, a printing unit 24, and an attachment unit 25.

The storage unit 20 included in the information processing device 2 stores various kinds of information. Examples of the various kinds of information include content, one or more pieces of environmental information, which will be described later, one or more pieces of additional information, which will be described later, and one or more pieces of account information.

Each of the one or more pieces of additional information in the storage unit 20 corresponds to, for example, a device identifier. Each of the one or more pieces of additional information in the storage unit 20 corresponds to, for example, account information. The account information is information regarding the account of the producer that logs in to the information processing device 2. The account information contains, for example, a user identifier and a password. In addition, correspondence to account information typically means correspondence to a user identifier.

The content acquisition unit 21 acquires content generated at a leisure venue. The content acquisition unit 21 receives content from any of the content generation devices 1, for example. The content acquisition unit 21 receives the content in a pair with a device identifier, for example. The content acquisition unit 21 receives content input by, for example, a producer. The producer is a person who supports the production of a food product to be provided at a leisure venue. The content acquisition unit 21 may be considered to include the content generation devices 1. The production of a food product may also be the production of content presentation media that are to be attached to food containers. For example, the content acquisition unit 21 is realized using a wireless or wired communication means. The content acquisition unit 21 can be realized using, for example, a device driver for the input means such as a touch panel or a keyboard, or control software or the like for controlling the menu screen. The content acquisition unit 21 can be realized using a processor, a memory, and so on. It should be noted that the processor may be a CPU, an MPU, a GPU, or the like, and there is no limitation on the type thereof.

The environment acquisition unit 22 acquires one or more pieces of environmental information. For example, the environment acquisition unit 22 automatically acquires one or more pieces of environmental information. For example, the environment acquisition unit 22 acquires one or more pieces of environmental information input by the user.

The environmental information is information regarding the environment in which the content is acquired. Examples of the environmental information include location information, time information, weather information, temperature information, and event information. The location information is information that indicates a leisure venue. The location information is, for example, the name of a leisure venue. The time information is information that specifies a point in time. The time information may indicate, for example, a year/month/date, a month/date, a year/month/date/time, or a time, but there is no limitation on the granularity thereof. The time information includes, for example, a day of the week. The weather information is information that specifies the weather. The weather information is, for example, "sunny", "cloudy", "rainy", or "sunny then rain". The temperature information is information that specifies the temperature. The event information is information regarding an event. Examples of the event information include an event name, the names of performers or groups appearing in the event, the event venue, and the date and time of the event. Examples of the event information include the names of the teams in the event "baseball game", the name of the singer in the event "concert", the title of the play and the names of the performers in the event "theatrical performance", the name of the amusement park in the event "leisure at an amusement park", and the name of the museum or the name of the event in the event "art appreciation".

For example, the environment acquisition unit 22 reads out the location information in the storage unit 20. For example, the environment acquisition unit 22 acquires time information from a clock (not shown). For example, the environment acquisition unit 22 acquires weather information, temperature information, etc. of the leisure location from a server (not shown). For example, the environment acquisition unit 22 reads out the event information in the storage unit 20.

Examples of the environmental information include environment-specific information and consumer-unique information. The environment-specific information is specific to the time when the content was acquired. Examples of the environment-specific information include time information, event time information, which is information that specifies the time when the content was acquired, weather information, and temperature information. Examples of the event time information include the inning in which a baseball player hit a home run, the time at which the home run was hit, and the moment a goal was scored in a soccer match (e.g., "15th minute of the first half"). The environment-specific information is typically information that specifies the time when the content was generated. The environment-specific information may be the name of a song that a singer is singing during a concert.

The consumer-unique information is information unique to a consumer to which a container-packaged food product is transferred. Examples of the consumer-unique information include the name of the consumer, the date of birth of the consumer, a still image of the consumer, an illustration of the consumer, information regarding events attended by the consumer, and information regarding attractions used by the consumer. It is preferable that the one or more pieces of environmental information acquired by the environment acquisition unit 22 include information other than the consumer-unique information. For example, the environment acquisition unit 22 acquires consumer-unique information input by a consumer.

It is preferred that the one or more pieces of environmental information do not contain the name of the food in the container, but contain a code that specifies the food. Examples of the code include a two-dimensional code, a one-dimensional code, and a number string. The two-dimensional code is, for example, a QR code (registered trademark). The one-dimensional code is, for example, a barcode. It is preferable that the code be a URL of a web page on which product information is posted.

The additional information acquisition unit 23 acquires one or more pieces of additional information. For example, the additional information acquisition unit 23 acquires acquires, from the storage unit 20, one or more pieces of additional information paired with the device identifier acquired in pair with the content. For example, the additional information acquisition unit 23 acquires, from the storage unit 20, one or more pieces of additional information paired with the account information of a terminal (not shown) that logs in to the information processing device 2. For example, the additional information acquisition unit 23 acquires additional information input by the producer.

The additional information is additional information regarding the leisure. For example, the additional information is information regarding the content. The additional information does not include environmental information. For example, the additional information is rights holder information. The rights holder information is information regarding the rights holder of the content. For example, the rights holder information is information that specifies the rights holder of the content. Examples of the right holder information include information indicating the copyright holder of the content, the logo of the copyright holder of the content, and a copyright mark (a circled C mark) indicating that the content is copyrighted.

The consumer-unique information described above may be considered as an example of the additional information. In such a case, the consumer-unique information does not belong to the environmental information.

The printing unit 24 prints the content acquired by the content acquisition unit 21 onto a print medium. The printing unit 24 prints the content onto a print medium, thereby acquiring a content presentation medium. Printing the content onto a print medium may be instructing any printing device 3 to print the content. It should be noted that one or more print media are set in the printing device 3. The instruction to the printing device 3 may also be based on human input. Such a human is typically the producer, but may also be a consumer.

The printing unit 24 can be realized using, for example, a processor, a memory, and so on. The printing unit 24 is realized by, for example, a printer driver. The printing unit 24 may be considered to include the printing devices 3.

The attachment unit 25 attaches the content presentation medium to the food containers. The attachment unit 25 may instruct any attachment device 4 to attach the content presentation medium to the food containers. It should be noted that if a person attaches the content presentation medium to the food containers, the attachment unit 25 is not required.

The attachment unit 25 can be realized using, for example, a processor, a memory, and so on. The attachment unit 25 is realized using, for example, a driver of the attachment devices 4. The attachment unit 25 may be considered to include the attachment devices 4.

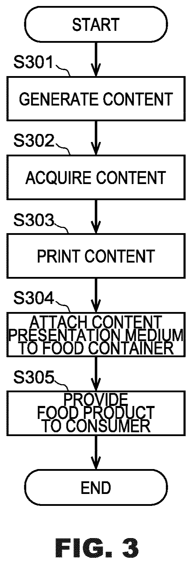

Next, the processing flow of a method for providing a food product at a leisure venue will be described with reference to the flowchart in FIG. 3.

(Step S301) Any content generation device 1 generates content. For example, a person who captures images uses a camera, which is any of the content generation devices 1, to capture a subject (e.g., a baseball player) to acquire content, which is a still image. For example, a creator uses a personal computer, which is the content generation device 1, to create content, which is an illustration.

(Step S302) The content acquisition unit 21 of the information processing device 2 acquires the content acquired in step S301. For example, the content acquisition unit 21 receives the content from the content generation device 1.

Here, the environment acquisition unit 22 may acquire one or more pieces of environmental information. In addition, the additional information acquisition unit 23 may acquire one or more pieces of additional information. The content acquisition unit 21 may acquire the content (e.g., a still image) generated by the content generation device 1 and content having one or more pieces of environmental information and/or one or more pieces of additional information. That is to say, the content to be printed may include one or more pieces of environmental information and/or one or more pieces of additional information.

(Step S303) The printing unit 24 instructs any printing device 3 to print the content acquired in step S302. The printing device 3 prints the content onto a print medium, thereby acquiring a content presentation medium.

(Step S304) The producer attaches the content presentation medium acquired in step S303 to the food container. This attachment processing completes the production of the food product with the content presentation medium attached to the food container thereof. In such a case, it is preferable that the food container have a guide on the surface thereof that specifies the area where the content presentation medium is to be attached.

Here, the attachment unit 25 may instruct any attachment device 4 to attach the content presentation medium acquired in step S303 to the food container. The attachment device 4 may attach the content presentation medium to the food container.

(Step S305) At the leisure venue, the food product completed by the procedure up to step S304 is provided to the consumer. The processing is terminated.

In the flowchart in FIG. 3, it is preferable that the procedures from step S303 to step S305 be repeated multiple times. That is to say, it is preferable that the food product with the content presentation medium attached to the container thereof be provided to multiple consumers.

In the flowchart in FIG. 3, multiple pieces of content may be generated, and the processing from S301 to S305 may be performed for each of the multiple pieces of content.

Furthermore, in the flowchart in FIG. 3, the content presentation medium may be attached to the container in a state where no food is present in the container, and thereafter food may be placed in the container.

Hereinafter, a specific method for providing a food product at a leisure venue according to the present embodiment will be described. Three specific examples are described below. It is assumed that the food here is a beverage and the container is a can.

Example 1 is a method for providing beverages at a baseball stadium. Example 2 is a method for providing beverages at a concert venue. Example 3 is a method for providing beverages at an anime event venue.

### Example 1

It is assumed that in a professional baseball game, a baseball player "YAMADA TARO" hits record-breaking "61st" home run at the stadium "JINGU STADIUM", which is a leisure venue. It is also assumed that a producer A uses a camera, which is a content generation device 1, to capture the home run scene. It is also assumed that the content generation device 1 subsequently acquires the image capture time "October 3, 2025, 20:17:56" from a clock (not shown). Next, the content generation device 1 transmits the captured still image and the image capture time to the information processing device 2.

Next, the content acquisition unit 21 of the information processing device 2 receives the still image or the like. Furthermore, a producer B inputs one or more pieces of environmental information to the information processing device 2. Here, the pieces of environmental information include the name of the player who hit the home run, the sequence number of the home run, and the character string "A NEW RECORD MOMENT". The pieces of environmental information also include the name of the baseball stadium, the league name "Central League," the name of the beverage "OOLONG TEA," and so on. Next, the environment acquisition unit 22 acquires the input environmental information. In addition, the environment acquisition unit 22 automatically acquires the reception time, "October 3, 2025, 20:17:56".

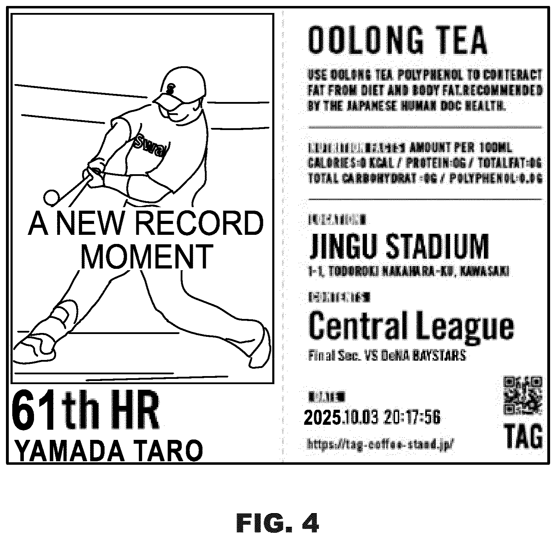

Next, the producer B inputs a print instruction, including the number of copies to be printed, to the information processing device 2. Next, the printing unit 24 of the information processing device 2 transmits an instruction to the corresponding printing device 3 to print the content onto the print medium in the number of copies to be printed. Next, the printing device 3 receives the instruction and prints the content onto the print media that have been set, thereby acquiring the content presentation media in the number of copies to be printed. An example of the content presentation media is shown in FIG. 4. Here, it is assumed that the print medium and the content presentation medium are stickers.

Next, a producer C attaches the content presentation medium, which is a sticker, to a beverage can. The producer C attaches the content presentation media to beverage cans in the number of copies to be printed, thereby producing the products in the number of copies to be printed.

Next, after the game ends, a commemorative beverage for the new home run record of the baseball player is sold at the stadium "JINGU STADIUM". A number of consumers (baseball spectators) equal to the number of printed copies purchase the beverage. As a result, the consumers are able to remember that they witnessed the record-breaking home run, thanks to the container of the beverage, and to make a great memory. It should be noted that even after the beverage inside the container is consumed, the memory remains because the container remains.

### Example 2

It is assumed that a singer named AAA is singing at the concert venue "NIPPON BUDOKAN". It is also assumed that a producer A uses a camera, which is a content generation device 1, to capture a scene from the concert by the singer AAA. It is also assumed that the content generation device 1 subsequently acquires the image capture time from a clock (not shown). Next, the content generation device 1 transmits the captured still image and the image capture time to the information processing device 2.

Next, the content acquisition unit 21 of the information processing device 2 receives the still image or the like. In addition, a producer B inputs one or more pieces of environmental information to the information processing device 2. Here, the pieces of environmental information includes the singer's name "SINGER AAA". The pieces of environmental information also include the concert start time, the name of the concert venue, the name of the concert event, and so on. Next, the environment acquisition unit 22 acquires the input environmental information. In addition, the environment acquisition unit 22 automatically acquires the reception time.

Next, the producer B inputs a print instruction, including the number of copies to be printed, to the information processing device 2. Next, the printing unit 24 of the information processing device 2 transmits an instruction to the corresponding printing device 3 to print the content onto the print medium in the number of copies to be printed. Next, the printing device 3 receives the instruction and prints the content onto the print media, thereby acquiring the content presentation media in the number of copies to be printed. Here, it is assumed that the print medium and the content presentation medium are stickers.

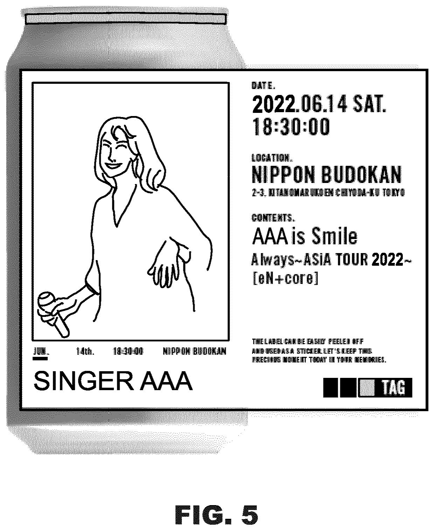

Next, a producer C attaches the content presentation medium, which is a sticker, to a beverage can. The producer C attaches the content presentation media to beverage cans in the number of copies to be printed, thereby producing the products in the number of copies to be printed. An image of a food container to which such a content presentation medium is attached is shown in FIG. 5.

Next, after the event ends, a commemorative beverage with a sticker of the scene from the singer AAA's concert will be sold at the concert venue "NIPPON BUDOKAN". A number of consumers (concert attendees) equal to the number of printed copies purchase the beverage. As a result, the consumers are able to remember that they attended the singer AAA's concert, thanks to the container of the beverage, and to make a great memory.

### Example 3

It is assumed that an illustrator named "XXX YYY" creates an illustration using a personal computer, which is a content generation device 1, at the anime event venue "Zepp Osaka Bayside" during the event. It is also assumed that the illustration is subsequently transmitted from the content generation device 1 to the information processing device 2 in response to an instruction from the illustrator.

Next, the content acquisition unit 21 of the information processing device 2 receives the illustration. In addition, a producer B inputs one or more pieces of environmental information to the information processing device 2. Here, the pieces of environmental information includes the illustrator "XXX YYY". The pieces of environmental information also includes the anime event start time, the event venue name, and so on. Next, the environment acquisition unit 22 acquires the input environmental information.

Next, the producer B inputs a print instruction, including the number of copies to be printed, to the information processing device 2. Next, the printing unit 24 of the information processing device 2 transmits an instruction to the corresponding printing device 3 to print the content onto the print medium in the number of copies to be printed. Next, the printing device 3 receives the instruction and prints the content onto the print media in the number of copies to be printed, thereby acquiring the content presentation media. Here, it is assumed that the print medium and the content presentation medium are stickers.

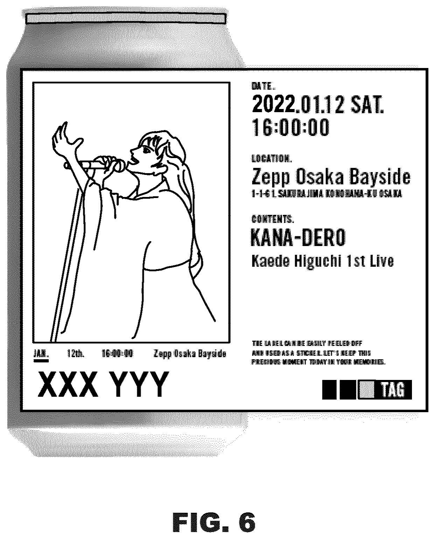

Next, a producer C attaches the content presentation medium, which is a sticker, to a beverage can. The producer C attaches the content presentation media to beverage cans in the number of copies to be printed, thereby producing the products in the number of copies to be printed. FIG. 6 shows an image of a food container to which such a content presentation medium is attached.

Next, after the game ends, a commemorative beverage with a sticker of the character illustration drawn by the illustrator "XXX YYY" will be sold at the event venue "Zepp Osaka Bayside". A number of consumers equal to the number of printed copies purchase the beverage. As a result, the consumers are able to remember that they attended the anime event, thanks to the container of the beverage, and to make a great memory.

### Example 4

It is assumed that in a professional baseball game, the "Hanshin baseball team" won the championship at "Koushien Stadium", which is the leisure venue. It is also assumed that a producer A uses a camera, which is a content generation device 1, to capture a scene of the manager being tossed into the air in celebration. It is also assumed that the content generation device 1 subsequently acquires the image capture time "October 30, 2025, 21:30:00" from a clock (not shown). Next, the content generation device 1 transmits the captured still image and the image capture time to the information processing device 2.

Next, the content acquisition unit 21 of the information processing device 2 receives the still image or the like. In addition, a producer B inputs one or more pieces of environmental information to the information processing device 2. Here, the pieces of environmental information include the name of the championship game, the name of the stadium, and the character string "Congratulations on Hanshin's championship victory". In addition, the pieces of environmental information includes descriptive text related to the celebratory tossing of the manager, for example. Next, the environment acquisition unit 22 acquires the input environmental information. In addition, the environment acquisition unit 22 automatically acquires the reception time "October 30, 2025, 21:30:00".

In addition, the producer B inputs, to the information processing device 2, rights holder information, which is an example of additional information. Here, the rights holder information includes the character string "Hanshin," which indicates the copyright holder for the content of the Hanshin baseball team. Next, the additional information acquisition unit 23 acquires the input right holder information. It should be noted that the additional information acquisition unit 23 may acquire from the storage unit 20 rights holder information paired with a device identifier paired with the content transmitted from the content generation device 1 to the information processing device 2.

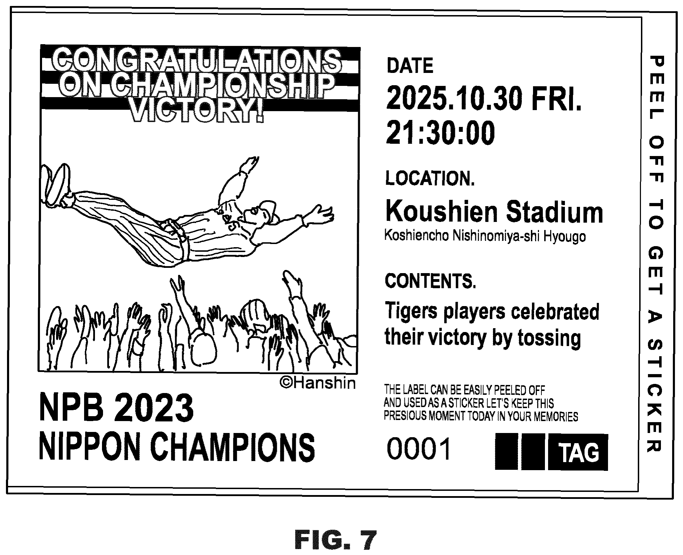

Next, the producer B inputs a print instruction, including the number of copies to be printed, to the information processing device 2. Next, the printing unit 24 of the information processing device 2 transmits an instruction to the corresponding printing device 3 to print the content onto the print medium in the number of copies to be printed. Next, the printing device 3 receives the instruction and prints the content onto the print media that have been set, to acquire the content presentation media in the number of copies to be printed. An example of the content presentation media is shown in FIG. 7. Here, it is assumed that the print medium and the content presentation medium are each a two-layer sticker from which an upper-layer sticker portion thereof is peelable. In FIG. 7, the rights holder information acquired by the additional information acquisition unit 23 and including a copyright mark indicating that the content has a copyright is also printed.

Next, a producer C attaches the lower sticker portion of the content presentation medium, which is a two-layer sticker, to a beverage can. The producer C attaches the content presentation media to beverage cans in the number of copies to be printed, thereby producing the products in the number of copies to be printed.

Next, after the game ends, a commemorative beverage for the Hanshin baseball team's championship victory will be sold at the stadium "Koushien Stadium". A number of consumers (baseball spectators) equal to the number of printed copies purchase the beverage. In this situation, the consumers recognize that the product is an official team product by visually confirming the content presenting the rights holder information, which gives them a sense of reassurance when making the purchase. As a result, the consumers are able to remember that they witnessed the championship moment, thanks to the container of the beverage, and to make a great memory. It should be noted that even after the beverage inside the container is consumed, the memory remains because the consumer can peel off the top layer sticker of the two-layer sticker and attach it to a personal belonging. Additionally, the container can be properly recycled once the sticker has been removed.

As described above, with the method for providing a food product according to the present invention, it is possible to provide a food product packaged in a container on which content generated at a leisure venue is presented, to a consumer, at the leisure venue. As a result, the consumer is able to acquire a food product that leaves memorable impression of the leisure experience. In addition, since the memorable content is presented on the container, the container, which is a memento, remains even after the food is consumed, making it possible to preserve the memorable impression of the leisure experience without it fading.

Also, with the method for providing a food product according to the present embodiment, one or more pieces of environmental information are also printed onto the content presentation medium, and therefore the consumer can acquire a food product that is even more memorable.

Also, with the method for providing a food product according to the present embodiment, the rights holder information is also printed onto the content presentation medium, which contributes to the protection of the content.

Also, with the method for providing a food product according to the present embodiment, the environment-specific information is also printed onto the content presentation medium, and therefore the consumer can acquire a food product that is even more memorable.

Also, with the method for providing a food product according to the present embodiment, consumer-unique information is also printed onto the content presentation medium, and therefore the consumer can acquire a food product that is even more memorable.

Also, with the method for providing a food product according to the present embodiment, the printed environmental information does not contain the name of the food in the container, but contains a code that specifies the food, making it possible to provide a food product with a more stylishly designed content presentation medium attached thereto, and allowing the consumer to acquire information regarding the product.

Also, with the method for providing a food product according to the present embodiment, time information specifying the time when the content was generated is also printed onto the content presentation medium, and therefore the consumer can acquire a food product that is even more memorable.

Also, with the method for providing a food product according to the present embodiment, the content presentation medium can be easily attached to the food container.

Also, with the method for providing a food product according to the present embodiment, a beverage in a beverage container on which content generated at a leisure venue is presented can be provided to a consumer at the leisure venue.

It should be noted that, according to the present embodiment, the method for providing a food product includes a method for producing a food product. A method for producing a food product is a method including a content acquisition step of acquiring content generated at a leisure venue; a printing step of printing the content onto a print medium to acquire a content presentation medium; and an attachment step of attaching the content presentation medium to a food container.

The processing in the present embodiment may be realized using software. This software may be distributed through software downloading or the like. Also, this software may be recorded on a recording medium such as a CD-ROM and distributed. It should be noted that the same applies to the other embodiments in the present description. The software that realizes the information processing device 2 according to the present embodiment is the program described below. That is to say, this program is a program for enabling a computer to function as: a content acquisition unit that acquires content generated at a leisure venue; a printing unit that prints the content onto a print medium to acquire a content presentation medium; and an attachment unit that attaches the content presentation medium to a food container.

It should be noted that the program may be executed by a single computer or multiple computers. That is to say, centralized processing or distributed processing may be performed.

Also, in the above-described embodiment, each kind of processing may be realized as centralized processing that is performed by a single device, or distributed processing that is performed by multiple devices.

As a matter of course, the present invention is not limited to the above-described embodiment, and various changes are possible, and such variations are also included within the scope of the present invention.

### Industrial Applicability

As described above, the method for providing a food product at a leisure venue according to the present invention has the effect of allowing a food product packaged in a container on which content generated at a leisure venue is presented, to be provided to a consumer at the leisure venue, and is useful, for example, as a product selling method or the like in which a food product that can serve as a memory for consumers who participated in an event is sold.

## Claims

1. A method for providing a food product at a leisure venue, comprising:
a content acquisition step of acquiring content generated at the leisure venue;
a printing step of printing the content onto a print medium to acquire a content presentation medium; and
an attachment step of attaching the content presentation medium to a container of the food product,
wherein the food product is provided to a consumer at the leisure venue.

2. The method according to claim 1, further comprising:
an environment acquisition step of acquiring one or more pieces of environmental information regarding an environment in which the content is acquired,
wherein, in the printing step, the content and the one or more pieces of environmental information are printed onto the print medium to acquire the content presentation medium.

3. The method according to claim 2,
wherein the one or more pieces of environmental information include environment-specific information that is specific to the time when the content was acquired.

4. The method according to claim 2 or 3,
wherein the one or more pieces of environmental information include consumer-unique information that is unique to the consumer to which the food product packaged in the container is transferred.

5. The method according to claim 4,
wherein, in the environment acquisition step, the consumer-unique information is automatically acquired.

6. The method according to claim 2,
wherein the one or more pieces of environmental information contain a code that specifies the food product instead of the name of the food product.

7. The method according to claim 2,
wherein the one or more pieces of environmental information contain time information that specifies the time when the content was generated.

8. The method according to claim 1, further comprising:
an additional information acquisition step of acquiring additional information regarding the content,
wherein, in the printing step, the content and the additional information are printed onto the print medium to acquire the content presentation medium.

9. The method according to claim 1,
wherein the container of the food product has a guide on a surface thereof, the guide specifying an area where the content presentation medium is to be attached.

10. The method according to claim 1,
wherein the food product is a beverage, and
the container of the food product is a beverage container.

11. The method according to claim 1,
wherein the content presentation medium is a two-layer sticker including an upper-layer sticker portion and a lower-layer sticker portion, and
the content is printed onto the upper-layer sticker portion.

12. The method according to claim 11,
wherein the two-layer sticker includes an indication that the upper-layer sticker portion is peelable.
